(19) Europäisches Patentamt
European Patent Office
Office européen des brevets

(11) EP 2 542 511 B1

(12) FASCICULE DE BREVET EUROPEEN

(45) Date de publication et mention de la délivrance du brevet:
**21.04.2021 Bulletin 2021/16**

(21) Numéro de dépôt: **11712940.3**

(22) Date de dépôt: **01.03.2011**

(51) Int Cl.:
***C04B 20/02*** (2006.01) ***C04B 24/26*** (2006.01)
***C04B 28/02*** (2006.01) ***C04B 14/10*** (2006.01)

(86) Numéro de dépôt international:
**PCT/FR2011/050418**

(87) Numéro de publication internationale:
**WO 2011/107704 (09.09.2011 Gazette 2011/36)**

# (54) PROCEDE D'INERTAGE D'ARGILES NON GONFLANTES

VERFAHREN ZUR INERTISIERUNG NICHT QUELLENDER TONE

METHOD FOR INERTING NON-SWELLING CLAYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2010 FR 1051486**

(43) Date de publication de la demande:
**09.01.2013 Bulletin 2013/02**

(73) Titulaire: **Holcim Technology Ltd**
**6300 Zug (CH)**

(72) Inventeurs:
- **VILLARD, Emmanuel**
**F-42320 Saint-Christo-en-Jarez (FR)**
- **WATT, Olivier**
**F-38110 Saint Jean de Soudain (FR)**
- **NARANJO, Horacio**
**F-38200 Jardin (FR)**
- **RINALDI, David**
**F-69003 Lyon (FR)**
- **JACQUET, Alain**
**F-01600 Saint-Didier de Formans (FR)**

(74) Mandataire: **Regimbeau**
**20, rue de Chazelles**
**75847 Paris Cedex 17 (FR)**

(56) Documents cités:
**EP-A1- 2 198 946**
**WO-A1-98/58887**
**WO-A1-2010/005117**
**WO-A2-2006/032785**
**WO-A2-2006/032786**
**US-A- 5 498 665**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte à un procédé d'inertage d'argiles dans des compositions hydrauliques.

Il est parfois difficile de maîtriser de façon constante les propriétés des compositions hydrauliques. La qualité des matières premières est souvent à l'origine de ces variations. En particulier, il a été constaté que les sables ou les additions minérales peuvent générer des fluctuations de propriétés des compositions hydrauliques. Dans certains cas, ces fluctuations sont dues à une baisse de l'efficacité de superplastifiants correspondant à des polymères à structure peigne.

Selon le document WO 98/58887, l'absorption de ces polymères par des argiles gonflantes de type 2 :1 présentes dans les sables est responsable de cette baisse d'efficacité. Le document WO 98/58887 propose l'utilisation d'agents modifiant l'activité des argiles gonflantes, par exemple en diminuant leur capacité d'absorption ou en réalisant un processus de pré-absorption. Le document WO 98/58887 propose entre autres utilisations celle de cations inorganiques ou organiques.

Toutefois, le plus souvent, les argiles contenues dans les sables et/ou les additions minérales ne comprennent pas que des argiles gonflantes mais comprennent également des argiles non gonflantes et, contrairement à ce qu'indique le document WO 98/58887, des argiles non gonflantes, de type 1 : 1 par exemple, peuvent également générer une baisse de la qualité des compositions hydrauliques.

Le but de la présente invention est donc de proposer un procédé de préparation de compositions hydrauliques utile pour réduire les effets indésirables liés à la présence d'argiles non gonflantes. En particulier, les industriels recherchent un procédé qui soit simple, rapide, fiable, peu coûteux et qui ne nécessite pas d'appareillages sophistiqués.

Ce but est atteint par l'utilisation d'agents particuliers. Ainsi, la présente invention se rapporte à un procédé d'inertage d'argiles non gonflantes dans au moins un composant minéral choisi parmi le sable et/ou une addition minérale destiné à la préparation d'une composition hydraulique, comprenant l'ajout à la composition hydraulique, au composant minéral ou à l'un des autres constituants de la composition hydraulique de 2 à 20% en masse, par rapport à la masse d'argiles gonflantes et non gonflantes sèches dans le sable et/ou l'addition minérale, d'un mélange inertant comprenant une molécule organique ayant une densité de charges cationiques strictement inférieure à 0,5 meq/g et comprenant au moins deux atomes chacun étant capable de former au moins une liaison hydrogène.

On décrit également un mélange pour inerter des argiles non gonflantes dans au moins un composant minéral destiné à la préparation d'une composition hydraulique, comprenant au moins une molécule organique ayant une densité de charges cationiques strictement inférieure à 0,5 meq/g et comprenant au moins deux atomes chacun étant capable de former au moins une liaison hydrogène.

Les agents inertants selon l'invention offrent au moins l'un des avantages suivants :

- les compositions hydrauliques obtenues par le procédé selon l'invention nécessitent un dosage en superplastifiant inférieur à celui qui serait nécessaire pour une composition hydraulique obtenue à partir du même composant minéral dans les mêmes proportions mais sans agent inertant selon l'invention, pour une consistance ou fluidité identique ;
- les compositions hydrauliques obtenues par le procédé selon l'invention nécessitent une quantité d'eau totale inférieure à celle qui serait nécessaire pour une composition hydraulique obtenue à partir du même composant minéral dans les mêmes proportions mais sans agent inertant selon l'invention, pour une consistance ou fluidité identique ;
- les agents inertants sont efficaces avec différentes argiles non gonflantes ;
- les agents inertants ne perturbent pas les caractéristiques de la composition hydraulique en cas de surdosage ;
- les agents inertants ne perturbent pas les résistances mécaniques de la composition hydraulique, à court terme, ou à long terme; et
- les agents inertants ne présentent pas d'effet retardateur de prise de la composition hydraulique.

Enfin, l'invention a, en outre, pour avantage de pouvoir être utilisée dans au moins une industrie, par exemple l'industrie du bâtiment, l'industrie chimique (adjuvantiers) l'industrie cimentière, les centrales à béton, les centrales de production de plâtre ou de fabrication d'objet en plâtre et/ou dans au moins l'un des marchés de la construction (bâtiment, génie civil, routes ou usine de préfabrication).

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique selon l'invention peut en particulier être un ciment, du plâtre ou de la chaux. De préférence, le liant hydraulique selon l'invention est un ciment.

Par l'expression « composition hydraulique », on entend selon la présente invention un mélange d'au moins

un liant hydraulique, avec de l'eau (dite eau de gâchage), éventuellement des granulats, éventuellement des additifs, et éventuellement des additions minérales. Une composition hydraulique peut par exemple être un béton hautes performances, un béton très hautes performances, un béton auto-plaçant, un béton auto-nivelant, un béton auto-compactant, un béton fibré, un béton prêt à l'emploi ou un béton coloré. Par le terme « béton », on entend également les bétons ayant subi une opération de finition telle que le béton bouchardé, le béton désactivé, ou le béton poli. On entend également selon cette définition le béton précontraint. Le terme « béton » comprend les mortiers ; dans ce cas précis le béton comprend un mélange d'au moins un liant hydraulique, de sable, d'eau, éventuellement d'additifs et éventuellement d'additions minérales. Le terme « béton » selon l'invention désigne indistinctement le béton frais ou le béton durci. De préférence, la composition hydraulique selon l'invention est un coulis de ciment, un mortier, un béton, un coulis de plâtre ou un coulis de chaux. Préférentiellement, la composition hydraulique selon l'invention est un coulis de ciment, un mortier ou un béton. La composition hydraulique selon l'invention peut être utilisée directement sur chantier à l'état frais et coulée dans un coffrage adapté à l'application visée, ou alors dans une usine de préfabrication, ou en tant qu'enduit sur un support solide.

Par le terme « sable », on entend selon la présente invention définir des granulats d'une taille granulométrique moyenne strictement supérieure à 0 mm et inférieure ou égale à 6 mm, de préférence variant de 0 à 4 mm. Ils peuvent être de toute nature minérale, par exemple, calcaire, siliceuse ou silico-calcaire ou autre. Cette définition inclut également des fillers ou d'autres matériaux inorganiques particulaires qui peuvent être présents dans des compositions hydrauliques.

Par l'expression « additions minérales », on entend selon la présente invention un matériau minéral finement divisé utilisé dans le béton ou le ciment afin d'améliorer certaines propriétés ou pour lui conférer des propriétés particulières. Il s'agit, par exemple, des cendres volantes (telles que définies dans la norme « Ciment » NF EN 197-1 paragraphe 5.2.4 ou telles que définies dans la norme « Béton » EN 450), des matériaux pouzzolaniques (tels que définis dans la norme « Ciment » NF EN 197-1 paragraphe 5.2.3), des fumées de silice (telles que définies dans la norme « Ciment » NF EN 197-1 paragraphe 5.2.7 ou telles que définies dans la norme « Béton » prEN 13263 :1998 ou NF P 18-502), des laitiers (tels que définis dans la norme « Ciment » NF EN 197-1 paragraphe 5.2.2 ou tels que définis dans la norme « Béton » NF P 18-506), des schistes calcinés (tels que définis dans la norme « Ciment » NF EN 197-1 paragraphe 5.2.5), des additions calcaires (telles que définis dans la norme « Ciment » NF EN 197-1 paragraphe 5.2.6 ou telles que définies dans la norme « Béton » NF P 18-508) et des additions siliceuses (telles que définies dans la norme « Béton » NF P 18-509) ou leurs mélanges.

Par le terme « argiles », on entend désigner selon la présente invention des silicates d'aluminium et/ou silicates de magnésium, notamment les phyllosilicates à structure en feuillets, typiquement espacés d'environ 7 à environ 14 Angströms. Dans les sables, on rencontre notamment la montmorillonite, l'illite, la kaolinite, la muscovite et les chlorites. Les argiles peuvent être de type 2 :1 mais aussi de type 1 :1 (kaolinite) ou 2 :1 :1 (chlorites).

Par le terme « argiles gonflantes », on entend désigner selon la présente invention les argiles qui ont des cations dans leurs espaces inter-feuillets capables de s'hydrater en présence d'eau (vapeur ou liquide). Les argiles gonflantes, appelées de façon générique smectites, comprennent notamment des argiles de type 2 : 1, telle que la montmorillonite.

Par le terme « argiles non gonflantes », on entend selon la présente invention les argiles ayant un espace inter-feuillet qui n'augmente pas en présence d'eau. Les argiles non gonflantes comprennent notamment les argiles de type 1 : 1 (notamment la kaolinite) ou de type 2 : 1 : 1 (notamment les chlorites).

Par le terme « inertage d'argile », on entend désigner selon la présente invention la neutralisation au moins partielle des effets nocifs dus à la présence de l'argile dans une composition hydraulique, notamment une composition hydraulique comprenant un superplastifiant.

Par l'expression « élément pour le domaine de la construction », on entend selon la présente invention tout élément constitutif d'une construction comme par exemple un sol, une chape, une fondation, un mur, une cloison, un plafond, une poutre, un plan de travail, un pilier, une pile de pont, un parpaing, une canalisation, un poteau, une corniche, un élément de voirie (par exemple une bordure de trottoir), une tuile, un revêtement (par exemple de route ou de mur), une plaque de plâtre, un élément isolant (acoustique et/ou thermique).

Par le terme « viscosité intrinsèque », on entend désigner selon la présente invention la valeur limite de la viscosité réduite à dilution infinie du polymère. Cette valeur est corrélée au poids moléculaire moyen d'un polymère.

Par « liaison hydrogène » ou « pont hydrogène », on entend désigner selon la présente invention une liaison physique non covalente, de type dipôle-dipôle, de basse intensité (vingt fois plus faible qu'une liaison covalente classique), reliant des molécules et qui comprend un atome d'hydrogène. Elle requiert un donneur de liaison hydrogène et un accepteur de liaison hydrogène. Le donneur est composé d'un composé à H acide, c'est-à-dire un hétéroatome (par exemple de l'azote, de l'oxygène, ou du soufre) porteur d'un atome hydrogène (comme dans les amines, les alcools ou les thiols). L'accepteur est composé d'un hétéroatome (uniquement de l'azote, de l'oxygène ou du soufre) porteur de doublets libres.

Par « atome d'une molécule organique capable de former une liaison hydrogène », on entend désigner selon

la présente invention un atome d'hydrogène ou un atome électronégatif, par exemple l'azote, l'oxygène ou le soufre, de la molécule organique selon l'invention capable de former au moins une liaison hydrogène.

L'invention est basée sur l'observation que les molécules organiques ayant une densité de charges cationiques strictement inférieure à 0,5 meq/g et comprenant au moins deux atomes chacun étant capable de former au moins une liaison hydrogène sont particulièrement efficaces pour inerter les argiles non gonflantes.

Plus précisément, l'invention propose un procédé d'inertage d'argiles non gonflantes dans au moins un composant minéral choisi parmi le sable et/ou une addition minérale destiné à la préparation d'une composition hydraulique, ladite composition hydraulique comprenant plusieurs constituants, le composant minéral étant l'un des constituants, et comprenant, en outre, un superplastifiant comprenant un polymère à structure peigne. Le procédé comprend l'ajout à la composition hydraulique, au composant minéral ou à l'un des autres constituants de la composition hydraulique, d'une molécule organique, ayant une densité de charges cationiques strictement inférieure à 0,5 meq/g et comprenant au moins deux atomes chacun étant capable former au moins une liaison hydrogène, la molécule organique étant adaptée à réduire l'adsorption du superplastifiant à structure peigne par les argiles non gonflantes. Dans la suite de la description, la molécule organique est appelée agent inertant pour argiles non gonflantes.

Selon l'invention, le procédé peut comprendre, en outre, l'ajout à la composition hydraulique, au composant minéral ou à l'un des autres constituants de la composition hydraulique, d'un polymère supplémentaire présentant une densité de charges cationiques supérieure à 0,5 meq/g et une viscosité intrinsèque inférieure à 1 dl/g, d'où il résulte l'inertage d'argiles gonflantes dans les sables et/ou les additions minérales. Dans la suite de la description, le polymère cationique supplémentaire est appelé agent inertant pour argiles gonflantes. Plus précisément, le procédé peut concerner également l'inertage d'argiles gonflantes dans le composant minéral et comprendre l'ajout à la composition hydraulique, au composant minéral ou à l'un des autres constituants de la composition hydraulique, d'un polymère cationique supplémentaire présentant une densité de charges cationiques supérieure à 0,5 meq/g et une viscosité intrinsèque inférieure à 1 dl/g, le polymère cationique étant adapté à réduire l'adsorption du superplastifiant à structure peigne par les argiles gonflantes.

Le composant minéral correspond à du sable et/ou à des additions minérales.

<u>Agent inertant pour argiles non gonflantes</u>

Selon un exemple de réalisation de l'invention, l'agent inertant pour argiles non gonflantes est hydrosoluble.

Selon un exemple de réalisation de l'invention, l'agent inertant pour argiles non gonflantes est une molécule organique neutre.

Selon un exemple de réalisation de l'invention, l'agent inertant pour argiles non gonflantes est un polymère ayant un poids moléculaire inférieur à 1000000 g/mol, de préférence inférieur à 500000 g/mol, plus préférentiellement inférieur à 100000 g/mol, encore plus préférentiellement inférieur à 50000 g/mol.

Selon un exemple de réalisation de l'invention, l'agent inertant pour argiles non gonflantes comprend au moins dix, de préférence au moins 50, plus préférentiellement, au moins 100 atomes chacun étant capable de former au moins une liaison hydrogène.

Selon un exemple de réalisation de l'invention, l'agent inertant pour argiles non gonflantes est un polymère ou un copolymère comprenant au moins un monomère ayant au moins un atome capable de former au moins une liaison hydrogène.

Selon un exemple de réalisation de l'invention, l'agent inertant pour argiles non gonflantes est choisi parmi le groupe comprenant un oxyalkylène (par exemple l'éthylène glycol et/ou le propylène glycol ou PEG), un éther en couronne, un alcool polyvinylique, un gluconate, un heptagluconate, un acide heptagluconique, un acide gluconique, un polysaccharide, notamment la cellulose ou la chitine, la dextrine, les dérivés de cellulose, le chitosan, les alginates, l'hémicellulose, la pectine, les polyols ou les protéines ou un mélange de ces composés.

De préférence, l'agent inertant pour argiles non gonflantes est un alcool polyvinylique ou PVA. A titre d'exemple, le PVA est obtenu par hydrolyse partielle d'un polymère polyacétate de vinyle.

De préférence, l'agent inertant pour argiles non gonflantes n'a pas en outre d'effet retardateur de prise, notamment comme cela est défini dans la norme « Béton » EN 934-2 intitulée « Adjuvants pour béton, mortier et coulis - Partie 2 - Adjuvants pour béton - Définitions, exigences, conformité, marquage et étiquetage ».

De préférence, l'agent inertant pour argiles non gonflantes n'a pas en outre l'effet d'un plastifiant/rétenteur d'eau, notamment comme cela est défini dans la norme « Béton » EN 934-2.

Selon un exemple de réalisation de l'invention, l'agent inertant pour argiles non gonflantes comprend des fonctions hydroxyle.

Selon un exemple de réalisation de l'invention, l'agent inertant pour argiles non gonflantes présente en outre un poids moléculaire exprimé par une viscosité intrinsèque inférieure à 1 dl/g, de préférence inférieure à 0,8 dl/g, et en particulier inférieure à 0,6 dl/g.

Selon un exemple de réalisation de l'invention, l'agent inertant pour argiles non gonflantes est obtenu par une

étape de polymérisation d'au moins un monomère vinyl acétate ou d'un composé analogue et une étape d'hydrolyse, le taux d'hydrolyse de la molécule organique étant inférieur à 95 %, de préférence inférieur à 94 %, plus préférentiellement inférieur à 93 %.

Selon un exemple de réalisation de l'invention, l'agent inertant pour argiles non gonflantes a de préférence une structure linéaire.

Superplastifiant

De préférence, la composition hydraulique comprend, en outre, un superplastifiant.

On entend par le terme « superplastifiant » selon la présente invention une molécule organique utilisée dans le domaine des compositions hydrauliques afin de fluidifier les compositions hydrauliques ou réduire le dosage en eau pour une consistance égale. Un superplastifiant selon la présente invention peut par exemple être un polymère à structure peigne, par exemple un PCP, un lignosulfonate, un polyoxyalkylène diphosphonate ou leurs mélanges.

On entend par PCP selon la présente invention un copolymère comprenant au moins une unité de formule (I)

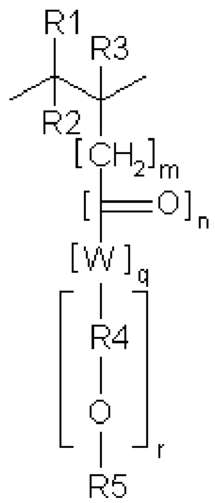

(I)

et au moins un motif de formule (II)

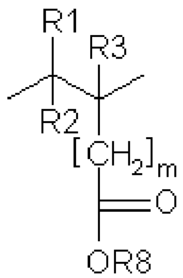

(II)

où R1, R2, R3 représentent indépendamment un atome d'hydrogène, un radical alkyle linéaire ou ramifié en $C_1$ à $C_{20}$, ou un radical phényle, ou un radical -COOR8 avec R8 représentant indépendamment un atome d'hydrogène, un radical alkyle linéaire ou ramifié en $C_1$ à $C_4$ ou un ion monovalent divalent ou trivalent ou un radical ammonium quaternaire ;

R4 représente un radical alkyle linéaire ou ramifié en $C_2$ à $C_{20}$ ;

R5 est un atome d'hydrogène ou un groupe alkyle en $C_1$ à $C_{20}$, ou un ion monovalent divalent ou trivalent, ou un radical ammonium quaternaire

ou R5 représente un radical de formule

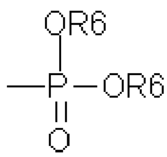

où R6 représente indépendamment un atome d'hydrogène, un radical alkyle linéaire ou ramifié en $C_1$ à $C_{20}$, ou un ion monovalent divalent ou trivalent, ou un radical ammonium quaternaire;
ou R5 représente un radical de formule

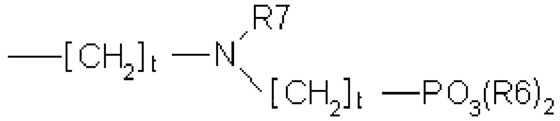

avec R7 représentant un atome d'hydrogène, un radical alkyle linéaire ou ramifié en $C_1$ à $C_{18}$ , ou un radical de formule

$$-[CH_2]_t - PO_3(R6)_2$$

où W représente indépendamment un atome d'oxygène ou d'azote ou un radical NH ;
m est un nombre entier compris de 0 à 2 ;
n est un nombre entier égal à 0 ou 1 ;
q est un nombre entier égal à 0 ou 1 ;
r est un nombre entier compris de 0 à 500 ;
t est un nombre entier compris de 0 à 18 ;
et la masse molaire dudit copolymère est comprise de 10 000 à 400 000 daltons.

Le nombre entier m de l'unité (I) et le nombre entier m de l'unité (II) sont indépendants, et peuvent être identiques ou différents.

Les nombres entiers t du radical R5 de l'unité (I) peuvent être identiques ou différents.

Les radicaux R1, R2, R3 et R4 (I) et W de l'unité (II) sont indépendants, et peuvent être identiques ou différents.

De préférence, un radical R1 représente un atome d'hydrogène.

De préférence, un radical R2 représente un atome d'hydrogène.

De préférence, un radical R3 représente un radical méthyle.

De préférence, un radical R4 représente un radical éthyle.

De préférence, le copolymère utilisé selon l'invention ou un de ses sels possède un nombre entier r compris de 1 à 300, de préférence compris de 20 à 250, plus préférentiellement compris de 40 à 200, encore plus préférentiellement compris de 40 à 150.

Le copolymère peut comprendre plusieurs unités différentes selon la formule (I) ayant, notamment, des radicaux R5 différents.

De préférence, le superplastifiant selon la présente invention est choisi parmi ceux les plus efficaces pour réduire la viscosité des compositions hydrauliques.

De préférence, le superplastifiant selon la présente invention a un poids moléculaire inférieur à 200000 g/mol, de préférence inférieur à 100000 g/mol et plus préférentiellement inférieur à 80000 g/mol.

Le superplastifiant selon l'invention peut être de structure linéaire, ramifiée, en peigne ou en étoile.

De préférence, l'agent inertant pour argiles non gonflantes, et/ou l'agent inertant pour argiles gonflantes et/ou le superplastifiant présentent une structure en peigne.

Tout particulièrement préféré est un superplastifiant de structure en peigne. Dans ce cas, la chaîne principale est en règle générale hydrocarbonée.

Le superplastifiant selon l'invention peut comprendre notamment des groupes carboxyliques, sulfoniques, ou phosphoriques.

Le superplastifiant selon l'invention peut comprendre par ailleurs des groupements pendants non ioniques, en particulier, des groupements polyéther. Les groupements polyéther comprennent généralement des unités d'éthylèneoxyde ou de propylèneoxyde ou une combinaison des deux.

Le superplastifiant selon l'invention peut également comprendre des groupements pendants de type di- ou oligo-saccharides (voir par exemple la demande de brevet EP 2072531) ou de type polyamine polyamide (voir par exemple la demande de brevet EP 2065349).

Beaucoup de superplastifiants tels que décrits sont connus en tant que tels.

Ils peuvent être obtenus directement par copolymérisation, procédé décrite dans les brevets EP 0056627, JP 58074552, US 5,393,343.

Ils peuvent également être préparés par modification post-synthétique d'un polymère, comme décrit par exemple dans le brevet US 5,614,017.

Le superplastifiant selon l'invention peut être ajouté à différents moments dans le procédé de fabrication, par exemple en même temps que l'agent inertant pour argiles non gonflantes ou que l'agent inertant pour argiles gonflantes

selon l'invention ou séparément de l'agent inertant pour argiles non gonflantes ou de l'agent inertant pour argiles gonflantes selon l'invention. Il peut être mélangé au liant hydraulique. Selon une variante, il peut être ajouté au moment de la préparation de la composition hydraulique selon l'invention. De préférence, le superplastifiant est ajouté après l'agent inertant pour argiles gonflantes et/ou après l'agent inertant pour argiles non gonflantes.

Agent inertant pour argiles gonflantes

Selon un exemple de réalisation de l'invention, l'agent inertant pour argiles gonflantes est hydrosoluble.

Selon un exemple de réalisation de l'invention, l'agent inertant pour argiles gonflantes présente une cationicité supérieure à 0,5 meq/g, de préférence supérieure à 1 meq/g, et plus préférentiellement supérieure à 2 meq/g.

Selon un exemple de réalisation de l'invention, l'agent inertant pour argiles gonflantes présente en outre un poids moléculaire exprimé par une viscosité intrinsèque inférieure à 1 dl/g, de préférence inférieure à 0,8 dl/g, et plus préférentiellement inférieure à 0,6 dl/g.

L'agent inertant pour argiles gonflantes peut être un polymère ayant une structure linéaire, peigne ou ramifiée. De préférence, l'agent inertant pour argiles gonflantes est un polymère à structure linéaire ou légèrement ramifiée.

Les groupes cationiques de l'agent inertant pour argiles gonflantes peuvent être notamment des groupes phosphonium, pyridinium, sulfonium et amine quaternaire, ces derniers étant préférés. L'agent pour argiles gonflantes peut être un polymère comprenant une chaîne principale et des groupes pendants. Ces groupes cationiques peuvent être situés sur la chaîne principale de l'agent inertant pour argiles gonflantes ou sur les groupes pendants.

L'agent inertant pour argiles gonflantes correspond, par exemple, aux polymères cationiques décrits dans la demande de brevet WO2006032785.

L'agent inertant pour argiles gonflantes peut être obtenu directement par un procédé de polymérisation connu, tel que la polymérisation radicalaire, la polycondensation ou la polyaddition.

Il peut également être préparé par modification post-synthétique d'un polymère, par exemple par greffage de groupements portant au moins une fonction cationique sur une chaîne polymérique portant des groupes réactifs appropriés.

La polymérisation est réalisée à partir d'au moins un monomère portant un groupe cationique ou un précurseur adapté.

Les agents inertants pour argiles gonflantes obtenus à partir de monomères portant des groupes amine et imine sont particulièrement utiles. L'azote peut être quaternisé après polymérisation de manière connue, par exemple par alkylation à l'aide d'un composé alkylant, par exemple par du chlorure de méthyle, ou en milieu acide, par protonation.

Les agents inertant pour argiles gonflantes contenant des groupes cationiques d'amine quaternaire sont particulièrement appropriés.

Les monomères portant déjà une fonction amine quaternaire cationique peuvent être, par exemple, les sels de diallyldialkyl ammonium, les (méth)acrylates de dialkylaminoalkyl quaternisés, et les (méth)acrylamides N-substitués par un dialkylaminoalkyl quaternisé.

La polymérisation peut être réalisée avec des monomères non ioniques, de préférence à chaîne courte, comportant 2 à 6 atomes de carbone. Des monomères anioniques peuvent également être présents à condition que le polymère finalement obtenu reste globalement cationique.

Dans le cadre de la modification de polymères par greffage, on peut citer les polymères naturels greffés, par exemple les amidons cationiques.

Avantageusement, l'agent inertant pour argiles gonflantes contient des groupes dont le caractère cationique n'apparait qu'en milieu acide. Les groupes amines tertiaires, qui sont cationiques par protonation en milieu acide, sont particulièrement préférés. L'absence de caractère ionique dans les compositions hydrauliques de type béton ou mortier présentant un pH alcalin permet d'améliorer encore plus leur robustesse par rapport à d'autres composés ioniques, notamment anioniques.

A titre d'exemple, on peut citer des polymères cationiques de la famille des polyvinylamines. Ils peuvent être obtenus par polymérisation de N-vinylformamide, suivie d'une hydrolyse. Les polyvinylamines quaternisés peuvent être préparés comme cela est décrit dans le brevet US 5,292,441. Les polymères de type polyéthylèneimine sont également appropriés. Ces derniers sont quaternisés par protonation.

Les polymères cationiques obtenus par polycondensation d'épichlorhydrine avec une mono- ou dialkylamine, notamment la méthylamine ou diméthylamine sont particulièrement préférés. Leur préparation a été décrite par exemple dans les brevets US 3,738,945 et US 3,725,312.

L'unité du polymère cationique obtenu par polycondensation de diméthylamine et d'épichlorhydrine peut être représentée comme suit :

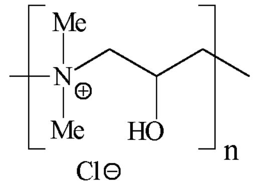

Les polymères de type polyacrylamide modifiés par réaction de Mannich tel que le polyacrylamide N-substitué par un groupe diméthylaminométhyle sont également appropriés .

Les agents inertants pour argiles gonflantes, obtenus par polycondensation de dicyandiamide et de formaldéhyde sont également appropriés. Ces polymères et leur procédé d'obtention sont décrits dans le brevet FR 1 042 084.

Selon un mode de réalisation préféré, l'agent inertant pour argiles gonflantes est susceptible d'être obtenu par condensation de dicyandiamide avec du formaldéhyde en présence de :

A) un polyalkylène glycol ; et/ou
B) un polycarboxylate polyalkoxylé, appelé également PCP ; et/ou
C) un dérivé ammonium.

La constitution chimique précise de l'agent inertant pour argiles gonflantes ainsi obtenu n'est pas connue avec précision. Il sera donc décrit ci-après essentiellement au moyen de son procédé de préparation.

<u>Procédé de préparation de l'agent inertant pour argiles gonflantes</u>

L'agent inertant pour argiles gonflantes est susceptible d'être obtenu par condensation du dicyandiamide avec du formol, éventuellement en présence d'autres composés, notamment d'un polyalkylène glycol (A), d'un polycarboxylate polyalkoxylé (B) et/ou d'un agent de quaternisation (C).

La réaction de condensation entre le dicyandiamide et le formol requiert 2 moles de formaldéhyde pour 1 mole de dicyandiamide, selon le schéma réactionnel (1) possible suivant :

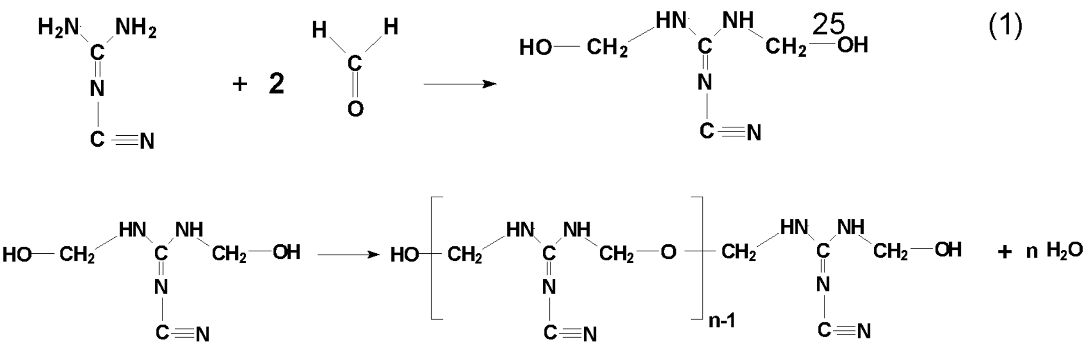

(1)

Ainsi, le ratio molaire entre formol et dicyandiamide est de préférence situé dans la plage de 0,8 : 1 à 4 : 1, en particulier de 1 : 1 à 3 : 1. Un excès molaire supérieur à 4 n'apporte pas d'avantage supplémentaire, mais peut conduire à une prise générale indésirable.

De préférence, la réaction est réalisée avec un léger excès stoechiométrique de formol, avec un ratio molaire entre formol et dicyandiamide situé dans la plage de 2,2 : 1 à 2,8 : 1.

De préférence, l'agent inertant pour argiles gonflantes est obtenu par condensation de formol avec dicyandiamide en présence de composés additionnels. En effet, cela permet de varier les propriétés de l'agent inertant pour argiles gonflantes, notamment sa solubilité dans l'eau et son affinité pour les argiles gonflantes.

Le polyalkylène glycol (composé A) est de préférence un composé de formule (III) :

$$R9\text{-}O\text{-}[R10\text{-}O]_n\text{-}R11 \qquad (III)$$

dans laquelle :

R10 est un groupe alkyle en $C_1$ à $C_4$, de préférence un groupe éthyle et/ou propyle ;
R9 et R11 sont indépendamment l'un de l'autre un atome d'hydrogène ou un groupe alkyle en $C_1$ à $C_4$, de préférence un groupe méthyle ; et

n est un nombre de 25 à 1000.

A titre d'exemple, il peut s'agir de polyéthylène glycol, de polypropylène glycol, d'un copolymère oxyde d'éthylène/oxyde de propylène ou d'un mélange de ces différents composés. De préférence, il s'agit de polyéthylène glycol.
Le poids moléculaire du composé A est de préférence de 1000 à 35000.
Les inventeurs ont mis en évidence par des mesures de viscosité que la présence du composé A modifie la structure de l'agent inertant pour argiles gonflantes ainsi que ses performances.
La quantité de composé A utilisé dans la réaction le cas échéant est inférieure à celle des réactants principaux dicyandiamide et formol.
Ainsi, le mélange réactionnel contient généralement 0 à 10 %, de préférence 0,5 à 3 %, et tout particulièrement 0,8 à 1 % en masse de composé A.
Le composé B est un PCP tel que défini précédemment en relation avec les formules (I) et (II).
Avantageusement, le mélange réactionnel contient 0,1 à 10 %, de préférence 0,5 à 5 %, et tout particulièrement 0,5 à 2 % en masse de composé B.
Le dérivé ammonium (composé C) a pour fonction principale d'augmenter le caractère ionique du polymère en apportant des fonctions cationiques. Le caractère ionique du polymère contribue grandement à sa solubilité dans l'eau et à son affinité pour les argiles gonflantes, et est donc avantageux pour une l'application envisagée.
De préférence, l'ion ammonium du dérivé ammonium est de formule (IV) suivante :

$$NH(R12)_3^+ \quad (IV)$$

dans laquelle
les groupements R12 sont identiques ou différents et correspondent à H ou à un groupement alkyle en $C_1$ à $C_6$.
On peut citer comme exemples de dérivés ammonium appropriés les halogénures d'ammonium tels que le chlorure d'ammonium, le bromure d'ammonium et l'iodure d'ammonium, le sulfate d'ammonium, l'acétate d'ammonium, le formiate d'ammonium, le nitrate d'ammonium, le phosphate d'ammonium, le formiate d'ammonium étant préféré.
La quantité de composé C utilisé peut varier dans de larges proportions. Toutefois, le ratio molaire entre le composé C et la dicyandiamide est de préférence de 1 à 1,5 et tout particulièrement de 1,1 à 1,3. Typiquement, le mélange réactionnel contient 1 à 10 %, de préférence 3 à 8 %, et tout particulièrement 6 à 8 % en masse de composé C.
La réaction de condensation se fait dans un solvant approprié, l'eau étant tout particulièrement préférée.
La quantité de solvant dans le mélange réactionnel est choisie de manière à obtenir la solubilisation des différents composants. A titre indicatif, le mélange réactionnel peut contenir 10 à 80 % en masse, de préférence de 20 à 70 % en masse de solvant.
Généralement, il est préférable de limiter la quantité d'eau dans le mélange réactionnel, afin de déplacer l'équilibre de la réaction de condensation vers le produit souhaité. Si l'on souhaite un produit dilué, il est donc avantageux d'ajouter le complément d'eau après la réaction.
Il peut être intéressant d'ajouter d'autres adjuvants classiques dans les polymérisations, tels que des agents de terminaison moléculaire. Ces composés permettent de contrôler la taille des molécules synthétisées et donc leur masse molaire et de diminuer ainsi l'indice de polydispersité des molécules synthétisées. Parmi les agents de terminaison appropriés, on peut citer notamment l'acide sulfamique.
La réaction de condensation se déroule rapidement, généralement en l'espace de 30 minutes à 4 heures environ. La vitesse de la réaction dépend de la température, laquelle peut être comprise entre la température ambiante et le point d'ébullition du mélange réactionnel. De préférence, elle varie de 20 e 95°C, de préférence de 60 à 95°C. A plus basse température, le temps de réaction sera plus long. Une durée de réaction prolongée à température élevée est toutefois indésirable, car elle peut conduire à la dégradation du produit.
Avantageusement, l'agent inertant pour argiles gonflantes est utilisé directement à la fin de la réaction, sans purification préalable. Il peut donc contenir d'autres produits que l'agent inertant pour argiles gonflantes attendu selon le schéma réactionnel (1) indiqué ci-dessus.

Mélange

On décrit un mélange selon l'invention pour l'inertage d'argiles non gonflantes dans au moins un composant minéral destiné à la préparation d'une composition hydraulique, comprenant au moins une molécule organique, appelée également agent inertant pour argiles non gonflantes, ayant une densité de charges cationiques strictement inférieure à 0,5 meq/g et comprenant au moins deux atomes chacun étant capable de former au moins une liaison hydrogène. Selon un exemple de réalisation, le mélange peut, en outre, comprendre un agent antimousse et/ou un biocide.
De préférence, le mélange comprend, outre l'agent inertant pour argiles non gonflantes, au moins un superplastifiant.

On décrit également un mélange pour l'inertage d'argiles gonflantes et non gonflantes dans le composant minéral, pas selon l'invention, comprenant, en outre, comme agent pour argiles gonflantes, un polymère cationique présentant une densité de charges cationiques supérieure à 0,5 meq/g et une viscosité intrinsèque inférieure à 1 dl/g.

Selon un exemple de réalisation, le rapport entre la proportion en masse de l'agent inertant pour argiles non gonflantes et la proportion en masse de l'agent inertant pour argiles gonflantes est ajusté en fonction du rapport entre la proportion en masse d'argiles non gonflantes et la proportion en masse d'argiles gonflantes. De préférence, le rapport entre la proportion en masse de l'agent inertant pour argiles non gonflantes et la proportion en masse de l'agent inertant pour argiles gonflantes est proportionnel au rapport entre la proportion en masse d'argiles non gonflantes et la proportion en masse d'argiles gonflantes.

Selon un exemple de réalisation, l'agent inertant pour argiles non gonflantes est hydrosoluble.

Selon un exemple de réalisation, l'agent inertant pour argiles non gonflantes est une molécule organique neutre.

Selon un exemple de réalisation, l'agent inertant pour argiles non gonflantes est un polymère ayant un poids moléculaire inférieur à 1000000 g/mol, de préférence inférieur à 500000 g/mol, plus préférentiellement inférieur à 100000 g/mol, encore plus préférentiellement inférieur à 50000 g/mol.

Selon un exemple de réalisation, l'agent inertant pour argiles non gonflantes comprend au moins dix, de préférence au moins 50, plus préférentiellement au moins 100 atomes chacun étant capable de former au moins une liaison hydrogène.

Selon un exemple de réalisation, l'agent inertant pour argiles non gonflantes est un polymère ou un copolymère comprenant au moins un monomère ayant au moins un atome capable de former au moins une liaison hydrogène.

Selon un exemple de réalisation, l'agent inertant pour argiles non gonflantes est choisi parmi le groupe comprenant un oxyalkylène (par exemple l'éthylène glycol et/ou le propylène glycol ou PEG), un éther en couronne, un alcool polyvinylique, un gluconate, un heptagluconate, un acide heptagluconique, un acide gluconique, un polysaccharide notamment la cellulose ou la chitine, la dextrine, les dérivés de cellulose, le chitosan, les alginates, l'hémicellulose, la pectine, les polyols ou les protéines ou un mélange de ces composés.

De préférence, l'agent inertant pour argiles non gonflantes est un alcool polyvinylique ou PVA. A titre d'exemple, le PVA est obtenu par hydrolyse partielle d'un polymère polyacétate de vinyle.

Selon un exemple de réalisation, l'agent inertant pour argiles non gonflantes comprend des fonctions hydroxyle.

Selon un exemple de réalisation, l'agent inertant pour argiles gonflantes présente en outre un poids moléculaire exprimé par une viscosité intrinsèque inférieure à 1 dl/g, de préférence inférieure à 0,8 dl/g, et plus préférentiellement inférieure à 0,6 dl/g.

Selon un exemple de réalisation, le polymère est obtenu par une étape de polymérisation d'au moins un monomère vinyl acétate ou d'un composé analogue et une étape d'hydrolyse, le taux d'hydrolyse de la molécule organique étant inférieur à 95 %, de préférence inférieur à 94 %, plus préférentiellement inférieur à 93 %.

Selon un exemple de réalisation, l'agent inertant pour argiles gonflantes a de préférence une structure linéaire.

## Composition hydraulique

On décrit également une composition hydraulique comprenant au moins un liant hydraulique et au moins le mélange tel que défini précédemment.

De préférence, le liant hydraulique est choisi parmi un ciment, du plâtre ou de la chaux. Préférentiellement, le liant hydraulique est un ciment.

De préférence, la composition hydraulique est un coulis de ciment, un mortier, un béton, un coulis de plâtre ou un coulis de chaux. Préférentiellement, la composition hydraulique est un coulis de ciment, un mortier ou un béton.

On décrit également un élément pour le domaine de la construction, réalisé en utilisant une composition hydraulique telle que définie précédemment.

On décrit également un procédé de fabrication de la composition hydraulique telle que définie précédemment, comprenant une étape de mise en contact du mélange, tel que défini précédemment, avec une eau de gâchage et le liant hydraulique.

## Traitement

L'agent inertant pour argiles non gonflantes ou l'agent inertant pour argiles gonflantes peuvent être utilisés, sous forme solide (granulé, bille), sous forme liquide, sous forme d'émulsion ou sous forme de suspension. A titre d'exemple, chacun de ces composés est sous forme d'une solution aqueuse qui peut comprendre, outre la matière active et le ou les solvants, notamment au moins un adjuvant classique, comme par exemple un agent de mouture, un accélérateur, un agent entraîneur d'air, un agent viscosant, un retardateur, un fluidifiant, un agent anti-retrait ou leurs mélanges. L'agent inertant pour argiles non gonflantes ou l'agent inertant pour argiles gonflantes peuvent être sous forme d'une solution aqueuse comprenant en outre un agent antimousse et/ou un biocide.

Le dosage est particulièrement aisé pour des formes liquides. D'autre part, compte tenu du poids moléculaire relativement faible des macromolécules sélectionnées, il peut être possible d'utiliser des solutions aqueuses à concentrations élevées en polymère sans problèmes liés à de fortes viscosités. Il est particulièrement intéressant d'utiliser des concentrations en polymère élevées pour réduire les coûts (transport, stockage). La concentration en polymères en solution peut varier, mais varie généralement de 20 à 80 % en masse.

A titre d'exemple, l'agent inertant pour argiles non gonflantes ou l'agent inertant pour argiles gonflantes peuvent être utilisés sous forme de poudre de façon à pouvoir être mélangés à sec avec le constituant choisi des compositions hydrauliques.

L'utilisation du mélange selon l'invention est utile pour inerter les argiles non gonflantes et gonflantes présentes dans certains constituants des compositions hydrauliques. Ces argiles non gonflantes et gonflantes peuvent affecter les propriétés des compositions hydrauliques, comprenant des superplastifiants ou non.

La teneur en impuretés du ou des constituants n'est pas limitée sauf pour des considérations économiques. De ce fait, des matériaux ayant une teneur en argile de 0,5 à 5 % en masse sont généralement traités.

Le traitement de matériaux contenant des argiles est particulièrement aisé et rapide. En effet, l'agent inertant pour argiles non gonflantes selon l'invention du mélange inertant présente une affinité importante avec les argiles non gonflantes et l'agent inertant pour argiles gonflantes du mélange inertant présente une affinité importante avec les argiles gonflantes. Ainsi, il suffit de mettre le mélange inertant en contact avec le matériau pour assurer un inertage des argiles gonflantes et non gonflantes comprises dans le matériau. Une mise en contact de quelques secondes est généralement suffisante.

Avantageusement, l'agent inertant pour argiles non gonflantes selon l'invention et l'agent inertant pour argiles gonflantes sont mis en contact avec le matériau à traiter par pulvérisation d'une solution aqueuse comprenant l'agent inertant pour les argiles non gonflantes selon l'invention et l'agent inertant pour les argiles gonflantes.

Dans le cas d'un matériau particulaire, le mélange se fait pendant ou après le traitement afin d'assurer une bonne répartition des polymères et obtenir un matériau traité de manière homogène.

Les argiles sont une source d'impuretés fréquente dans les composants minéraux pour les compositions hydrauliques, notamment dans les sables, les additions minérales ou le liant hydraulique.

De préférence, le composant minéral est mis en contact avec le mélange inertant par pulvérisation du mélange inertant en solution aqueuse sur le composant minéral.

Afin d'assurer une bonne répartition du mélange inertant et d'obtenir un composant minéral traité de manière homogène, le composant minéral est de préférence mélangé.

La pulvérisation peut avoir lieu dans un récipient, par exemple dans une caisse à chicanes à la sortie d'une bande de convoyage. Ce mode de réalisation assure en outre une faible perte du produit. Selon une variante, une solution du mélange inertant peut être pulvérisée dans un mélangeur placé en sortie de bande. Un pré-mélange d'une petite quantité de composant minéral peut être préparé avec le mélange inertant puis ce pré-mélange peut être ajouté au composant minéral. Une solution du mélange inertant peut être pulvérisée sur le composant minéral lors de son transport par une bande de convoyage.

Le mélange inertant est de préférence appliqué sur le composant minéral en une quantité appropriée pour assurer l'inertage complet des argiles gonflantes et non gonflantes présentes dans le composant minéral et donc éviter un surdosage en superplastifiant.

Toutefois, un traitement partiel peut être envisagé et l'application en quantité supérieure ne détériore pas les propriétés désirées de la composition hydraulique. Ainsi, il n'est pas nécessaire de doser la quantité d'argiles gonflantes et non gonflantes présentes dans le composant minéral au préalable pour déterminer la quantité nécessaire du mélange inertant.

En effet, la quantité du mélange inertant nécessaire pour inerter dépend principalement de la teneur en argiles gonflantes et non gonflantes du composant minéral. Elle peut également varier en fonction de la nature des argiles présentes. Le traitement d'un sable et/ou d'une addition minérale est réalisé avec un dosage de 2 à 20 % en masse, de préférence 5 à 10 % de mélange inertant par rapport à la masse d'argiles gonflantes et non gonflantes sèches dans le sable et/ou l'addition minérale.

Le mélange inertant peut être ajouté à au moins un constituant de la composition hydraulique contenant les argiles gonflantes et non gonflantes indésirables. Il peut également être ajouté au moment de la préparation de la composition hydraulique, par exemple dans l'eau de gâchage.

Le mélange inertant peut donc être utilisé en carrière, en centrale à béton, en cimenterie, en centrale de production de plâtre ou en centrale de fabrication d'objets en plâtre.

Le traitement direct des composants minéraux, par exemple en carrière de sable, sera toutefois généralement plus efficace et donc privilégié.

Les composants minéraux ainsi traités peuvent être utilisés de manière classique, notamment pour la préparation de compositions à prise hydraulique. Ils sont utiles dans la préparation de compositions hydrauliques présentant des propriétés constantes.

En particulier, les composants minéraux ainsi traités sont utiles dans la préparation de compositions hydrauliques, dans lesquelles les argiles gonflantes et non gonflantes peuvent réduire l'efficacité des superplastifiants.

On constate que ce procédé de traitement est très versatile. En effet, il donne des résultats très satisfaisants pour différents ciments, notamment des ciments avec des ajouts, par exemple des pouzzolanes ou des additions calcaires.

Les compositions hydrauliques comprenant au moins un composant minéral comprenant des argiles gonflantes et non gonflantes traitées avec le mélange inertant présentent des propriétés rhéologiques comparables avec celles préparées avec le composant minéral exempt d'argiles, sans surdosage en superplastifiant.

Le procédé décrit permet de traiter même des composants minéraux fortement pollués. En effet, le mélange inertant décrit est efficace à un faible dosage, et rend ainsi le processus d'inertage des argiles gonflantes et non gonflantes à l'échelle industrielle économiquement viable.

Enfin, le procédé ne nécessite pas la mise en place d'un appareillage particulier.

Il en résulte que le procédé décrit peut être efficace dans un large éventail de conditions et pour différents types de compositions hydrauliques et d'argiles.

L'invention est décrite plus en détail au moyen des exemples suivants, donnés à titre non limitatif.

## EXEMPLES

### Mesure de la cationicité d'un polymère cationique

La cationicité ou densité de charges cationiques (en meq/g) représente la quantité de charges (en mmol) portée par 1 g de polymère. Cette propriété a été mesurée par titration colloïdale avec un polymère anionique en présence d'un indicateur coloré sensible à l'ionicité du polymère en excès.

Dans les exemples ci-après, la cationicité a été déterminée de la manière suivante.

Les composés suivants ont été introduits dans un récipient adapté :

- 60 ml d'une solution tampon de phosphate de sodium à 0,001 M - pH 6,
- et 1 ml de solution de bleu d'o-toluidine à 4,1 x $10^{-4}$ M
- puis 0,5 ml de solution de polymère cationique à doser.

Cette solution a été titrée avec une solution de polyvinylsulfate de potassium jusqu'à virage de l'indicateur. On a obtenu la cationicité par la relation suivante :

$$\text{Cationicité (meq/g)} = (V_{epvsk} * N_{pvsk}) / (V_{pc} * C_{pc})$$

dans laquelle :

$V_{pc}$ est le volume de solution du polymère cationique ;
$C_{pc}$ est la concentration de polymère cationique en solution ;
$V_{epvsk}$ est le volume de solution de polyvinylesulfate de potassium ; et
$N_{pvsk}$ est la normalité de la solution de polyvinylesulfate de potassium.

### Mesure de la viscosité intrinsèque d'un polymère

Les mesures de viscosité intrinsèque des polymères ont été réalisées dans une solution NaCl 3 M, avec un viscosimètre capillaire de type Ubbelhode, à 25°C.

Le temps d'écoulement a été mesuré dans le tube capillaire entre deux repères pour le solvant et des solutions du polymère à différentes concentrations. La viscosité spécifique a été obtenue pour chaque concentration, en divisant la différence entre les temps d'écoulement de la solution de polymère et du solvant, par le temps d'écoulement du solvant. La viscosité réduite a été calculé en divisant la viscosité spécifique par la concentration de la solution de polymère. En traçant la droite de la viscosité réduite en fonction de la concentration de la solution de polymère, on a obtenu une droite. L'intersection avec l'ordonnée de cette droite correspondait à la viscosité intrinsèque pour une concentration égale à zéro.

Cette valeur a été corrélée au poids moléculaire moyen d'un polymère.

Formulations du mortier

Tableau 1 - Formulation (1) du mortier

| Constituant | Masse (g) |
|---|---|
| Ciment | 480 |
| Filler calcaire Betocarb | 359 |
| Sable PE2LS | 200-X |
| Sable normalisé | 1350 |
| Argiles | X |
| Eau de pré-mouillage | 100,8 |
| Eau de gâchage | 222,4 |
| Adjuvants | 4 |

Le ciment était un ciment de type CEM I 52.5N CE CP2 NF (provenance Le Havre - usine Lafarge). Le matériau de remplissage (filler) était un matériau calcaire (Bétocarb d'Erbray comprenant environ 90 % en masse de passant au tamis de 100 $\mu$m) (fournisseur : OMYA). Le sable normalisé était un sable siliceux conforme à la norme EN 196.1 (fournisseur: Société Nouvelle du Littoral). Le sable PE2LS était un sable siliceux de diamètre inférieur ou égal à 0,315 mm (Fournisseur: Fulchiron). Les adjuvants comprenaient un superplastifiant, le Glénium 27 (extrait sec : 20,3 % en masse ; Fournisseur : BASF). Les argiles pouvaient comprendre de la montmorillonite, de la kaolinite ou un mélange de montmorillonite et de kaolinite. La valeur X représentait la masse totale en gramme d'argiles.

Tableau 2 - Formulation (2) du mortier

| Constituant | Masse (g) |
|---|---|
| Ciment | 405 |
| Sable PE2LS | 60-X |
| Sable normalisé | 1350 |
| Argiles | X |
| Eau de pré-mouillage | 84,6 |
| Eau de gâchage | 176,8 |
| Adjuvants | 2,5 |

Le ciment était un ciment de type CEM I 52.5N CE CP2 NF (provenance Le Havre - usine Lafarge). Le sable normalisé était un sable siliceux conforme à la norme EN 196.1 (fournisseur : Société Nouvelle du Littoral). Le sable PE2LS était un sable siliceux de diamètre inférieur ou égal à 0,315 mm (Fournisseur: Fulchiron). Les adjuvants comprenaient le Chrysoplast CER (extrait sec : 24,3% en masse ; Fournisseur : Chryso). Les argiles pouvaient comprendre de la montmorillonite, de la kaolinite ou un mélange de montmorillonite et de kaolinite. La valeur X représentait la masse totale en gramme d'argiles.

Protocole de préparation des mortiers selon la formulation (1) ou (2) :

Un mortier a été préparé selon la formulation (1) ou (2) dans le bol d'un malaxeur Perrier.

Le sable a été introduit, puis l'eau de pré-mouillage et un malaxage a été effectué à faible vitesse (140 tr/min) pendant 1 minute. Le mélange a été laissé au repos pendant 4 minutes avant d'introduire les liants (ciment et filler). Les instants de mesure de l'étalement du mortier ont été chronométrés par rapport à l'instant d'introduction des liants. Les sables utilisés étaient ceux indiqués dans les formulations (1) et (2). Le malaxage est repris pendant 1 minute à petite vitesse puis l'eau de gâchage additionnée du superplastifiant a été ajoutée petit à petit en 30 secondes. Enfin, le malaxage est repris encore 2 minutes à 280 tr/min.

Lorsque le mortier comprenait un agent inertant, celui-ci a été ajouté au sable. Le rapport E/C a été maintenu constant pour les différentes séries d'essais.

Mesure de l'étalement des mortiers selon les formulations (1) et (2)

L'étalement du mortier a été mesuré grâce à un mini cône d'Abrams dont le volume était de 800 mL. Les dimensions du cône étaient les suivantes :

- diamètre du cercle de la base supérieure : 50 +/- 0,5 mm ;
- diamètre du cercle de la base inférieure : 100 +/- 0,5 mm ; et
- hauteur : 150 +/- 0,5 mm.

Le cône a été posé sur une plaque de verre séchée et rempli de mortier frais. Il a ensuite été arasé. La levée du cône a provoqué un affaissement du mortier sur la plaque de verre. Le diamètre du disque obtenu a été mesuré en millimètres +/- 5 mm. Ceci correspondait à l'étalement du mortier.

EXEMPLES A, B, C et D (exemples de comparaison)

Afin d'évaluer l'effet néfaste des argiles dans les compositions hydrauliques, les niveaux d'ouvrabilité ont été comparés pour un mortier selon la formulation (1) ou pour un mortier selon la formulation (2), le mortier étant préparé avec :

- un sable sans argile (Exemple A) ;
- un sable comprenant 2 % en masse de kaolinite par rapport à la masse de sable (argiles comprises) (Exemple B) ;
- un sable comprenant 2 % en masse de montmorillonite par rapport à la masse de sable (argiles comprises) (Exemple C) ; et
- un sable comprenant 2 % en masse de kaolinite et 2 % en masse de montmorillonite par rapport à la masse de sable (argiles comprises) (Exemple D).

Dans la suite de la description, pour le mortier selon la formulation (1), un étalement considéré suffisant à 5 minutes correspondait à un étalement supérieur à 280 mm et, pour le mortier selon la formulation (2), un étalement considéré suffisant à 5 minutes correspondait à un étalement supérieur à 180 mm.

L'étalement à 5 minutes a été mesuré après préparation du mortier selon la formulation (1) et du mortier selon la formulation (2). Les résultats sont rassemblés dans le tableau 3 ci-dessous. Les inventeurs ont constaté tout d'abord que les argiles avaient un effet néfaste sur l'étalement puisqu' un étalement suffisant à 5 minutes n'a pas été obtenu. Ces essais ont mis par ailleurs en évidence que la kaolinite avait un effet néfaste, bien que moins prononcé que la montmorillonite.

EXEMPLE 1 (pas selon l'invention)

L'agent inertant pour argiles gonflantes utilisé pour les exemples 1 à 3 était une polyamine épichlorhydrine - diméthylamine, ayant une cationicité de 7,3 meq/g et une viscosité intrinsèque de 0,04 dl/g (FL2250 ; extrait sec : 54,5 % en masse ; Fournisseur : SNF).

Ensuite un mortier a été préparé selon la formulation (1) avec 2 % en masse de kaolinite par rapport à la masse de sable (argiles comprises). En outre, 98,2 g d'eau de pré-mouillage a été utilisé et 5,69 g du polymère cationique obtenu (en solution à 54,5 % d'extrait sec) a été ajouté après l'eau de pré-mouillage, c'est-à-dire qu'il a été ajouté 10 % en masse de polymère cationique sec par rapport à la masse d'argiles.

Ensuite un mortier a été préparé selon la formulation (2) avec 2 % en masse de kaolinite par rapport à la masse de sable (argiles comprises). En outre, 82,2 g d'eau de pré-mouillage a été utilisé et 5,17 g du polymère cationique obtenu (en solution à 54,5 % d'extrait sec) a été ajouté après l'eau de pré-mouillage, c'est-à-dire qu'il a été ajouté 10 % en masse de polymère cationique sec par rapport à la masse d'argiles.

L'étalement a été mesuré à 5 minutes après préparation du mortier. Un étalement à 5 minutes suffisant a été obtenu avec un dosage de 10 % en masse de polymère cationique FL2250 calculé en polymère sec par rapport à la masse d'argile (kaolinite).

Les résultats des essais A,B,C, D et l'Exemple 1 qui précédent et les résultats des Exemples 2 à 9 suivants sont rassemblés dans le tableau 3 ci-dessous.

Tableau 3 :

| Exemple (1) | Dosage inertant argiles gonflantes (% masse polymère sec / masse argiles) | Dosage inertant argiles non gonflantes (% masse polymère sec / masse argile) | Etalement à 5 min (mm) Formulation (1) | Etalement à 5 min (mm) Formulation (2) | Argile (% masse / masse de sable, argiles comprises) |
|---|---|---|---|---|---|
| A | - | - | 320 | 220 | - |
| B | - | - | 170 | 180 | 2 % kaolinite |
| C | - | - | 100 | 130 | 2 % montmorillonite |
| D | - | - | 100 | 105 | 2 % montmorillonite + 2 % kaolinite |
| 1 | 10 | - | 305 | 195 | 2 % kaolinite |
| 2 | 10 | - | 315 | 210 | 2 % montmorillonite |
| 3 | 10 | - | 260 | 185 | 2 % montmorillonite + 2 % kaolinite |
| 4 | - | 10 | 305 | 190 | 2 % kaolinite |
| 5 | - | 10 | 260 | 190 | 2 % montmorillonite |
| 6 | - | 10 | 200 | 165 | 2 % montmorillonite + 2 % kaolinite |
| 7 | 5 | 5 | 300 | 180 | 2 % montmorillonite + 2 % kaolinite |
| 8 | 3 | 3 | 285 | 180 | 2 % montmorillonite + 2 % kaolinite |
| 9 | 2,5 | 7,5 | 280 | 160 | 2 % montmorillonite + 2 % kaolinite |
| 10 | 1,5 | 4,5 | 255 | 150 | 2 % montmorillonite + 2 % kaolinite |
| 11 | - | 10 | 310 | 190 | 2 % kaolinite |
| 12 | - | 10 | 270 | 175 | 2 % kaolinite |
| 13 | - | 10 | 300 | 190 | 2 % kaolinite |
| 14 | 5 | 5 | 325 | 200 | 2 % kaolinite |

| | | | | | |
|---|---|---|---|---|---|
| 15 | 5 | 5 | 335 | 185 | 2 % montmorillonite |
| 16 | 5 | 5 | 290 | 195 | 2 % montmorillonite + 2 % kaolinite |
| 17 | 5 | 5 | 355 | 230 | 2 % kaolinite |
| 18 | 5 | 5 | 375 | 195 | 2 % montmorillonite |
| 19 | 5 | 5 | 350 | 190 | 2 % montmorillonite + 2 % kaolinite |

EXEMPLE (pas selon l'invention)

L'exemple 1 a été répété en remplaçant la kaolinite ajoutée au sable par de la montmorillonite. On a constaté que l'étalement à 5 minutes du mortier sans argile a été atteint avec un dosage de 10 % en masse de polymère cationique, le FL2250, calculé en polymère sec par rapport à la masse d'argiles (montmorillonite). L'étalement à 5 minutes obtenu avec l'agent inertant pour argiles gonflantes était plus important lorsque l'argile était la montmorillonite par rapport à la kaolinite.

EXEMPLE (pas selon l'invention)

L'exemple 1 a été répété en ajoutant 2 % en masse de montmorillonite et 2 % en masse de kaolinite rapport à la masse de sable (argiles comprises). Les inventeurs ont constaté que l'étalement à 5 minutes du mortier obtenu avec un dosage de 10 % en masse de polymère cationique, le FL2250, calculé en polymère sec par rapport à la masse d'argiles (montmorillonite et kaolinite), n'était pas suffisant pour le mortier selon la formulation (1) et était juste suffisant pour le mortier selon la formulation (2).

EXEMPLE 4

L'agent inertant pour argiles non gonflantes utilisé pour les exemples 4 à 6 était un alcool polyvinylique (Mowiol 4-88 ; extrait sec : 19,8 % en masse ; Fabriquant : Kuraray) obtenu par hydrolyse partielle d'acétate de polyvinyle et caractérisé par un taux d'hydrolyse de 88 % et une viscosité dans une solution à 4 % et à 20°C de 4 mPa.s (mesurée selon la norme DIN 53015). Dans l'exemple 4 ainsi que dans les exemples qui vont suivre, lorsque l'agent inertant pour argiles non gonflantes était un alcool polyvinylique, un agent anti mousse a été ajouté au mortier préparé selon la formulation (1) ou (2) (2,5 % en masse par rapport à la masse d'extrait sec d'alcool polyvinylique).

Un mortier a été préparé selon la formulation (1) avec 2 % en masse de kaolinite par rapport à la masse de sable (argiles comprises). En outre, 88,2 g d'eau de pré-mouillage a été utilisé et 15,7 g de l'agent inertant pour argiles non gonflantes (en solution à 19,8 % d'extrait sec) a été ajouté après l'eau de pré-mouillage, c'est-à-dire qu'il a été ajouté 10 % en masse de l'agent inertant pour argiles non gonflantes sec par rapport à la masse d'argiles.

Un mortier a été préparé selon la formulation (2) avec 2 % en masse de kaolinite par rapport à la masse de sable (argiles comprises). En outre, 73,2 g d'eau de pré-mouillage a été utilisé et 14,2 g de l'agent inertant pour argiles non gonflantes (en solution à 19,8 % d'extrait sec) a été ajouté après l'eau de pré-mouillage, c'est-à-dire qu'il a été ajouté 10 % en masse de l'agent inertant pour argiles non gonflantes sec par rapport à la masse d'argiles.

L'étalement a été mesuré à 5 minutes après préparation du mortier. Un étalement suffisant du mortier a été obtenu à 5 minutes avec un dosage de 10 % en poids d'agent inertant pour argiles non gonflantes calculé en polymère sec par rapport au poids d'argile (kaolinite).

EXEMPLE 5

L'exemple 4 a été répété en remplaçant la kaolinite ajoutée au sable par de la montmorillonite. On a constaté que l'étalement à 5 minutes du mortier avec un dosage de 10 % en poids d'agent inertant pour argiles non gonflantes, le Mowiol 4-88, calculé en polymère sec par rapport au poids d'argile (montmorillonite), n'était pas suffisant pour le mortier selon la formulation (1) et était suffisant pour le mortier selon la formulation (2).

EXEMPLE 6

L'exemple 4 a été répété en ajoutant 2 % en poids de montmorillonite et 2 % en poids de kaolinite par rapport au poids de sable (argiles comprises). Les inventeurs ont constaté que l'étalement à 5 minutes du mortier avec un dosage de 10 % en poids d'agent inertant pour argiles non gonflantes, le Mowiol 4-88, calculé en polymère sec par rapport au poids d'argile (montmorillonite et kaolinite), n'était pas suffisant.

EXEMPLE 7

Pour les exemples 7 à 10, l'agent inertant pour argiles gonflantes était le FL2250 et l'agent inertant pour argiles non gonflantes était le Mowiol 4-88.

Un mortier a été préparé selon la formulation (1) avec 2 % en poids de kaolinite et 2 % en poids de montmorillonite par rapport au poids du sable (argiles comprises). En outre, 85,6 g d'eau de pré-mouillage a été utilisé et 5,69 g du polymère FL2250 obtenu (en solution à 54,5 % d'extrait sec) et 15,7 g du polymère Mowiol 4-88 obtenu (en solution à 19,8 % d'extrait sec) ont été ajoutés après l'eau de pré-mouillage, c'est-à-dire qu'il a été ajouté 5 % en poids d'agent inertant pour argiles gonflantes sec par rapport au poids de l'argile et 5 % en poids d'agent inertant pour argiles non gonflantes sec par rapport au poids de l'argile.

Un mortier a été préparé selon la formulation (2) avec 2 % en poids de kaolinite et 2 % en poids de montmorillonite par rapport au poids du sable (argiles comprises). En outre, 70,7 g d'eau de pré-mouillage a été utilisé et 5,17 g du polymère FL2250 obtenu (en solution à 54,5 % d'extrait sec) et 14,2 g du polymère Mowiol 4-88 obtenu (en solution à 19,8 % d'extrait sec) ont été ajoutés après l'eau de pré-mouillage, c'est-à-dire qu'il a été ajouté 5 % en poids d'agent inertant pour argiles gonflantes sec par rapport au poids de l'argile et 5 % en poids d'agent inertant pour argiles non gonflantes sec par rapport au poids de l'argile.

L'étalement a été mesuré à 5 minutes après préparation du mortier. Un étalement suffisant à 5 minutes a été obtenu avec des dosages de 5 % en poids de polymère FL2250 et de 5 % en poids de polymère Mowiol 4-88, calculés en polymère sec par rapport au poids d'argile (montmorillonite et kaolinite).

EXEMPLE 8

L'exemple 7 a été répété en utilisant 3 % d'agent inertant pour argiles gonflantes, le FL2250 et 3 % d'agent inertant pour argiles non gonflantes, le Mowiol 4-88. Un étalement suffisant à 5 minutes a été obtenu avec des dosages de 3 % en poids du polymère FL2250 et de 3 % en poids du polymère Mowiol 4-88, calculés en polymère sec par rapport au poids de l'argile (montmorillonite et kaolinite).

EXEMPLE 9

L'exemple 7 a été répété en utilisant 2,5 % de polymère FL2250 et 7,5 % de polymère Mowiol 4-88. Un étalement suffisant à 5 minutes a été obtenu pour le mortier selon la formulation (1) et un étalement à 5 minutes insuffisant a été obtenu pour le mortier selon la formulation (2) avec des dosages de 2,5 % en poids du polymère FL2250 et de 7,5 % en poids du polymère Mowiol 4-88, calculés en polymère sec par rapport au poids de l'argile (montmorillonite et kaolinite).

EXEMPLE 10

L'exemple 7 a été répété en utilisant 1,5 % de polymère FL2250 et 4,5 % de polymère Mowiol 4-88. Un étalement insuffisant à 5 minutes a été obtenu avec des dosages de 1,5 % en poids du polymère FL2250 et de 4,5 % en poids du polymère Mowiol 4-88, calculés en polymère sec par rapport au poids d'argile (montmorillonite et kaolinite).

EXEMPLE 11

L'agent inertant pour argiles non gonflantes utilisé pour l'exemple 11 était un alcool polyvinylique (Mowiol 8-88 ; extrait sec : 8,8 % en masse ; Fabriquant : Kuraray) obtenu par hydrolyse partielle d'acétate de polyvinyle et caractérisé par un taux d'hydrolyse de 88 % et une viscosité dans une solution à 4 % et à 20°C de 4 mPa.s (mesurée selon la norme DIN 53015).

Ensuite un mortier a été préparé selon la formulation (1) avec 2 % en poids de kaolinite par rapport au poids de sable (argiles comprises). En outre, 68,5 g d'eau de pré-mouillage a été utilisé et 35,3 g (en solution à 8,8 % d'extrait sec) du polymère Mowiol 8-88 obtenu a été ajouté après l'eau de pré-mouillage, c'est-à-dire qu'il a été ajouté 10 % en poids de polymère sec par rapport au poids de l'argile.

Ensuite un mortier a été préparé selon la formulation (2) avec 2 % en poids de kaolinite par rapport au poids

de sable (argiles comprises). En outre, 55,4 g d'eau de pré-mouillage a été utilisé et 32,0 g (en solution à 8,8 % d'extrait sec) du polymère Mowiol 8-88 obtenu a été ajouté après l'eau de pré-mouillage, c'est-à-dire qu'il a été ajouté 10 % en poids de polymère sec par rapport au poids de l'argile.

L'étalement a été mesuré à 5 minutes après préparation du mortier. Les inventeurs ont constaté qu'un étalement du mortier suffisant à 5 minutes était atteint avec un dosage de 10 % en poids du polymère Mowiol 8-88, calculé en polymère sec par rapport au poids d'argile (kaolinite).

EXEMPLE 12

L'agent inertant pour argiles non gonflantes utilisé pour l'exemple 12 était un alcool polyvinylique (Mowiol 10-98 ; extrait sec: 13,7% en masse; Fabriquant : Kuraray) obtenu par hydrolyse partielle d'acétate de polyvinyle ayant un taux d'hydrolyse de 98 % et une viscosité dans une solution à 4 % et à 20°C de 10 mPa.s (mesurée selon la norme DIN 53015).

Ensuite un mortier a été préparé selon la formulation (1) avec 2 % en poids de kaolinite par rapport au poids de sable (argiles comprises). En outre, 78,5 g d'eau de pré-mouillage a été utilisé et 25,4 g du polymère Mowiol 10-98 obtenu (en solution à 12,2 % d'extrait sec) a été ajouté après l'eau de pré-mouillage, c'est-à-dire qu'il a été ajouté 10 % en poids de polymère sec par rapport au poids de l'argile.

Ensuite un mortier a été préparé selon la formulation (2) avec 2 % en poids de kaolinite par rapport au poids de sable (argiles comprises). En outre, 64,3 g d'eau de pré-mouillage a été utilisé et 23,1 g du polymère Mowiol 10-98 obtenu (en solution à 12,2 % d'extrait sec) a été ajouté après l'eau de pré-mouillage, c'est-à-dire qu'il a été ajouté 10 % en poids de polymère sec par rapport au poids de l'argile.

L'étalement a été mesuré à 5 minutes après préparation du mortier. On a constaté qu'un étalement insuffisant du mortier était atteint à 5 minutes avec un dosage de 10 % en poids du polymère Mowiol 10-88, calculé en polymère sec par rapport au poids de l'argile (kaolinite).

EXEMPLE 13

L'agent inertant pour argiles non gonflantes utilisé pour l'exemple 13 était un alcool polyvinylique (Mowiol 18-88 ; extrait sec: 13,7% en masse; Fabriquant : Kuraray) obtenu par hydrolyse partielle d'acétate de polyvinyle et caractérisé par un taux d'hydrolyse de 88 % et une viscosité dans une solution à 4 % et à 20°C de 18 mPa.s (mesurée selon la norme DIN 53015).

Ensuite un mortier a été préparé selon la formulation (1) avec 2 % en poids de kaolinite par rapport au poids de sable (argiles comprises). En outre, 81,1 g d'eau de pré-mouillage a été utilisé et 22,7 g du polymère Mowiol 18-88 (en solution à 13,7 % d'extrait sec) obtenu a été ajouté après l'eau de pré-mouillage, c'est-à-dire qu'il a été ajouté 10 % en poids de polymère sec par rapport au poids de l'argile.

Ensuite un mortier a été préparé selon la formulation (2) avec 2 % en poids de kaolinite par rapport au poids de sable (argiles comprises). En outre, 66,8 g d'eau de pré-mouillage a été utilisé et 20,7 g du polymère Mowiol 18-88 (en solution à 13,7 % d'extrait sec) obtenu a été ajouté après l'eau de pré-mouillage, c'est-à-dire qu'il a été ajouté 10 % en poids de polymère sec par rapport au poids de l'argile.

L'étalement a été mesuré à 5 minutes après préparation du mortier. Les inventeurs ont constaté qu'un étalement suffisant du mortier à 5 minutes était atteint avec un dosage de 10 % en poids du polymère Mowiol 18-88, calculé en polymère sec par rapport au poids de l'argile (kaolinite).

EXEMPLE 14

L'agent inertant pour argiles gonflantes utilisé pour les exemples 14, 15 et 16 était obtenu par polycondensation de dicyandiamide formaldéhyde quaternisé au formiate d'ammonium (DF ; extrait sec : 53,4 % en masse). L'agent inertant pour argiles non gonflantes utilisé pour les exemples 14, 15 et 16 était le Mowiol 4-88.

Un mortier a été préparé selon la formulation (1) avec 2 % en poids de kaolinite par rapport au poids de sable (argiles comprises). En outre, on 93,1 g d'eau de pré-mouillage a été utilisé et 2,9 g (en solution à 53,4 % d'extrait sec) du polymère DF obtenu et 7,8 g du polymère Mowiol 4-88 obtenu (en solution à 19,8 % d'extrait sec) ont été ajoutés après l'eau de pré-mouillage, c'est-à-dire qu'il a été ajouté 5 % en poids de l'agent inertant pour argiles gonflantes, calculé en polymère sec par rapport au poids d'argile et 5 % en poids de l'agent inertant pour argiles non gonflantes, calculé en polymère sec par rapport au poids de l'argile.

Un mortier a été préparé selon la formulation (1) avec 2 % en poids de kaolinite par rapport au poids de sable (argiles comprises). En outre, 77,6 g d'eau de pré-mouillage a été utilisé et 2,62 g (en solution à 53,4 % d'extrait sec) du polymère DF obtenu et 7,1 g du polymère Mowiol 4-88 obtenu (en solution à 19,8 % d'extrait sec) ont été ajoutés après l'eau de pré-mouillage, c'est-à-dire qu'il a été ajouté 5 % en poids de l'agent inertant pour argiles gonflantes,

calculé en polymère sec par rapport au poids d'argile et 5 % en poids de l'agent inertant pour argiles non gonflantes, calculé en polymère sec par rapport au poids de l'argile.

L'étalement a été mesuré à 5 minutes après préparation du mortier. Un étalement suffisant à 5 minutes a été obtenu avec des dosages de 5 % en poids du polymère DF et de 5 % en poids du polymère Mowiol 4-88, calculés en polymère sec par rapport au poids de l'argile (kaolinite).

EXEMPLE 15

L'exemple 14 a été répété en remplaçant la kaolinite ajoutée au sable par de la montmorillonite. Un étalement suffisant à 5 minutes a été obtenu avec des dosages de 5 % en poids du polymère DF et de 5 % en poids du polymère Mowiol 4-88, calculés en polymère sec par rapport au poids de l'argile (montmorillonite).

EXEMPLE 16

L'exemple 14 a été répété en ajoutant 2 % en poids de montmorillonite et 2 % en poids de kaolinite par rapport au poids du sable (argiles comprises). Un étalement suffisant à 5 minutes a été obtenu avec des dosages de 5 % en poids du polymère DF et de 5 % en poids du polymère Mowiol 4-88, calculés en polymère sec par rapport au poids de l'argile (montmorillonite et kaolinite).

EXEMPLE 17

L'agent inertant pour argiles gonflantes utilisé pour les exemples 17, 18 et 19 était un polyDADMAC (polymère obtenu par polycondensation de diallyle diméthyl ammonium chloré). L'agent inertant pour argiles gonflantes avait une cationicité de 6,2 meq/g (PolyDADMAC TS45RD (sous forme de poudre) ; extrait sec : 90 % en masse ; Fournisseur : SNF). L'agent inertant pour argiles non gonflantes utilisé pour les exemples 17, 18 et 19 était le Mowiol 4-88.

Un mortier a été préparé selon la formulation (1) avec 2 % en poids de kaolinite par rapport au poids de sable (argiles comprises). En outre, 94,3 g d'eau de pré-mouillage a été utilisé et 1,7 g du polymère Polydadmac obtenu et 7,8 g du polymère Mowiol 4-88 obtenu ont été ajoutés après l'eau de pré-mouillage, c'est-à-dire qu'il a été ajouté 5 % en poids de l'agent inertant pour argiles gonflantes, calculé en polymère sec par rapport au poids de l'argile et 5 % en poids de l'agent inertant pour argiles non gonflantes, calculé en polymère sec par rapport au poids de l'argile.

Un mortier a été préparé selon la formulation (2) avec 2 % en poids de kaolinite par rapport au poids du sable (argiles comprises). En outre, 78,6 g d'eau de pré-mouillage a été utilisé et 1,57 g du polymère Polydadmac obtenu et 7,1 g du polymère Mowiol 4-88 obtenu ont été ajoutés après l'eau de pré-mouillage, c'est-à-dire qu'il a été ajouté 5 % en poids de l'agent inertant pour argiles gonflantes, calculé en polymère sec par rapport au poids de l'argile et 5 % en poids de l'agent inertant pour argiles non gonflantes, calculé en polymère sec par rapport au poids de l'argile.

L'étalement a été mesuré à 5 minutes après préparation du mortier. Un étalement suffisant à 5 minutes a été obtenu avec des dosages de 5 % en poids du polymère Polydadmac et de 5 % en poids du polymère Mowiol 4-88, calculés en polymère sec par rapport au poids de l'argile (kaolinite).

EXEMPLE 18

L'exemple 17 a été répété en remplaçant la kaolinite ajoutée au sable par de la montmorillonite. Un étalement suffisant à 5 minutes a été obtenu avec des dosages de 5 % en poids du polymère Polydadmac et de 5 % en poids du polymère Mowiol 4-88, calculés en polymère sec par rapport au poids de l'argile (montmorillonite).

EXEMPLE 19

L'exemple 17 a été répété en ajoutant 2 % en poids de montmorillonite et 2 % en poids de kaolinite rapport au poids du sable (argiles comprises). Un étalement suffisant à 5 minutes a été obtenu avec des dosages de 5 % en poids du polymère Polydadmac et de 5 % en poids du polymère Mowiol 4-88 calculés, en polymère sec par rapport au poids de l'argile (montmorillonite et kaolinite).

## Revendications

1. Procédé d'inertage d'argiles non gonflantes dans au moins un composant minéral choisi parmi le sable et/ou une addition minérale destiné à la préparation d'une composition hydraulique, comprenant l'ajout à la composition hydraulique, au composant minéral ou à l'un des autres constituants de la composition hydraulique, de 2 à 20% en

masse, par rapport à la masse d'argiles gonflantes et non gonflantes sèches dans le sable et/ou l'addition minérale, d'un mélange inertant comprenant une molécule organique ayant une densité de charges cationiques strictement inférieure à 0,5 meq/g et comprenant au moins deux atomes chacun étant capable de former au moins une liaison hydrogène.

2. Procédé selon la revendication 1, dans lequel la molécule organique est neutre.

3. Procédé selon la revendication 1 ou 2, dans lequel la molécule organique est obtenue par une étape de polymérisation d'au moins un monomère vinyl acétate et une étape d'hydrolyse, le taux d'hydrolyse de la molécule organique étant inférieur à 95 %.

4. Procédé selon l'une quelconque des revendications 1 à 3, dans lequel la molécule organique est un alcool polyvinylique.

5. Procédé selon l'une quelconque des revendications 1 à 4, dans lequel le mélange inertant comprend en outre un polymère cationique présentant une densité de charges cationiques supérieure à 0,5 meq/g et une viscosité intrinsèque inférieure à 1 dl/g, d'où il résulte l'inertage d'argiles gonflantes dans le sable et/ou l'addition minérale.

6. Procédé selon l'une quelconque des revendications 1 à 5, dans lequel la composition hydraulique est un béton ou un mortier.

7. Utilisation d'un mélange pour inerter les argiles non gonflantes présentes dans le sable et/ou l'addition minérale d'une composition hydraulique, à un dosage de 2 à 20% en masse de mélange par rapport à la masse d'argiles gonflantes et non gonflantes sèches dans le sable et/ou l'addition minérale, le mélange comprenant au moins une molécule organique ayant une densité de charges cationiques strictement inférieure à 0,5 meq/g et comprenant au moins deux atomes chacun étant capable de former au moins une liaison hydrogène.

## Patentansprüche

1. Verfahren zur Inertisierung von nichtquellenden Tonen in mindestens einer Mineralkomponente, ausgewählt aus Sand und/oder einem Mineralzusatz, vorgesehen zur Herstellung einer hydraulischen Zusammensetzung, umfassend die Zugabe von 2 bis 20 Massen-%, bezogen auf die Masse von trockenen quellenden und nichtquellenden Tonen in dem Sand und/oder dem Mineralzusatz, eines inertisierenden Gemischs, umfassend ein organisches Molekül mit einer kationischen Ladungsdichte, die strikt kleiner als 0,5 mÄq/g ist, und umfassend mindestens zwei Atome, die jeweils dazu in der Lage sind, mindestens eine Wasserstoffbrückenbindung zu bilden, zu der hydraulischen Zusammensetzung, zu der Mineralkomponente oder zu einem der anderen Bestandteile der hydraulischen Zusammensetzung.

2. Verfahren nach Anspruch 1, wobei das organische Molekül neutral ist.

3. Verfahren nach Anspruch 1 oder 2, wobei das organische Molekül durch einen Schritt einer Polymerisation von mindestens einem VinylacetatMonomer und einem Schritt einer Hydrolyse erhalten wird, wobei der Hydrolysegrad des organischen Moleküls kleiner als 95 % ist.

4. Verfahren nach einem der Ansprüche 1 bis 3, wobei das organische Molekül ein Polyvinylalkohol ist.

5. Verfahren nach einem der Ansprüche 1 bis 4, wobei das inertisierende Gemisch weiterhin ein kationisches Polymer umfasst, das eine kationische Ladungsdichte, die größer als 0,5 mÄq/g ist, und eine Grenzviskosität, die kleiner als 1 dl/g ist, aufweist, was zu der Inertisierung von quellenden Tonen in dem Sand und/oder dem Mineralzusatz führt.

6. Verfahren nach einem der Ansprüche 1 bis 5, wobei die hydraulische Zusammensetzung ein Beton oder ein Mörtel ist.

7. Verwendung eines Gemischs zum Inertisieren von nichtquellenden Tonen, die in dem Sand und/oder dem Mineralzusatz einer hydraulischen Zusammensetzung vorliegen, in einer Dosierung von 2 bis 20 Massen-%, bezogen auf die Masse von trockenen quellenden und nichtquellenden Tonen in dem Sand und/oder dem Mineralzusatz, wobei das Gemisch mindestens ein organisches Molekül mit einer kationischen Ladungsdichte, die strikt kleiner als 0,5 mÄq/g ist, und umfassend mindestens zwei Atome, die jeweils dazu in der Lage sind, mindestens eine Wasserstoffbrückenbindung zu bilden, umfasst.

## Claims

1. Process to inert non-swelling clays in at least one mineral component selected from sand and/or a mineral addition intended for the preparation of a hydraulic composition, comprising adding to the hydraulic composition, to the mineral component or to another constituent of the hydraulic composition 2 to 20% by mass, relative to the mass of swelling clays and dry non-swelling clays in the sand and/or mineral addition, of an inerting mixture comprising an organic molecule having a cationic charge density which is strictly lower than 0.5 meq/g and comprising at least two atoms each being capable of forming at least one hydrogen bond.

2. Process according to claim 1, wherein the organic molecule is neutral.

3. Process according to claim 1 or 2, wherein the organic molecule is obtained by a step of polymerisation of at least one vinyl acetate monomer and a step of hydrolysis, the degree of hydrolysis of the organic molecule being less than 95%.

4. Process according to any of claims 1 to 3, wherein the organic molecule is a polyvinyl alcohol.

5. Process according to any of claims 1 to 4, wherein the inerting mixture also comprises a cationic polymer having a cationic charge density greater than 0.5 meq/g and an intrinsic viscosity less than 1 dl/g, resulting in the inerting of swelling clays in the sand resulting in the inerting of swelling clays in the sand and/or mineral addition.

6. Process according to any of claims 1 to 5, wherein the hydraulic composition is concrete or mortar.

7. Use of a mixture for inerting non-swelling clays present in the sand and/or the mineral addition of a hydraulic composition, at a dose of 2 to 20% by mass of mixture relative to the mass of swelling clays and dry non-swelling clays in the sand and/or the mineral addition, the mixture comprising at least one organic molecule having a cationic charge density strictly lower than 0.5 meq/g and comprising at least two atoms each being capable of forming at least one hydrogen bond.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9858887 A
- EP 2072531 A
- EP 2065349 A
- EP 0056627 A
- JP 58074552 B
- US 5393343 A
- US 5614017 A
- WO 2006032785 A
- US 5292441 A
- US 3738945 A
- US 3725312 A
- FR 1042084